# EUROPÄISCHE PATENTSCHRIFT

(11) **EP 1 240 720 B1**
(45) Veröffentlichungstag und Bekanntmachung des Hinweises auf die Patenterteilung: **02.05.2007**
(21) Anmeldenummer: 00993561.0
(22) Anmeldetag: 11.12.2000
(51) Int. Cl.: H04B 1/38, H04L 27/00, H04L 27/06

(54) **VERFAHREN UND SCHALTUNG ZUR ÜBERTRAGUNG EINES DATENMODULIERTEN HOCHFREQUENZ-DATENSIGNALS VON EINEM SENDER ZU EINEM EMPFÄNGER MIT VEREINFACHTER EMPFÄNGERARCHITEKTUR**
METHOD AND CIRCUIT FOR TRANSMITTING A DATA-MODULATED HIGH-FREQUENCY DATA SIGNAL FROM A TRANSMITTER TO A RECEIVER HAVING A SIMPLIFIED RECEIVER ARCHITECTURE
PROCEDE ET CIRCUIT POUR TRANSMETTRE UN SIGNAL DE DONNEES HAUTE FREQUENCE MODULE EN DONNEES, ENTRE UN EMETTEUR ET UN RECEPTEUR A ARCHITECTURE DE RECEPTION SIMPLIFIEE

(30) Priorität: 22.12.1999 DE 19962458
(43) Veröffentlichungstag der Anmeldung: 18.09.2002
(73) Patentinhaber: SIEMENS AKTIENGESELLSCHAFT, 80333 München (DE)
(72) Erfinder: SCHIEFER, Martin, A-3180 Lilienfeld (AT); KONRAD, Wolfgang, A-2340 Mödling (AT); VEITH, Peter-Ernst, A-1190 Wien (AT)
(86) Internationale Anmeldenummer: PCT/DE2000/004398
(87) Internationale Veröffentlichungsnummer: WO 2001/047131

(56) Entgegenhaltungen:
- DAVARIAN F: "MOBILE DIGITAL COMMUNICATIONS VIA TONE CALIBRATION" IEEE TRANSACTIONS ON VEHICULAR TECHNOLOGY,US,IEEE INC. NEW YORK, Bd. VT-36, Nr. 2, Mai 1987 (1987-05), Seiten 55-62, XP000759221 ISSN: 0018-9545
- HOLDEN T P ET AL: "A SPREAD-SPECTRUM BASED SYNCHRONIZATION TECHNIQUE FOR DIGITAL BROADCAST SYSTEMS" IEEE TRANSACTIONS ON BROADCASTING,US,IEEE INC. NEW YORK, Bd. 36, Nr. 3, 1. September 1990 (1990-09-01), Seiten 185-194, XP000161660 ISSN: 0018-9316
- LEE K K ET AL: "A NEW FEEDFORWARD TRACKING SYSTEM BANDPASS FILTER FOR CARRIER RECOVERY SYSTEMS" INTERNATIONAL CONFERENCE ON COMMUNICATIONS,US,NEW YORK, IEEE, Bd. -, 1. Juni 1985 (1985-06-01), Seiten 1010-1014, XP000795171

## Beschreibung

Die Erfindung betrifft einen mobilen Datenspeicher mit einer Antenne zum Empfang eines Hochfrequenz-Datensignals. Die Erfindung betrifft weiterhin ein Identifikationssystem mit einem Schreib-/Lesegerät und mindestens einem solchen mobilen Datenspeicher sowie eine geeignete Verwendung des Identifikationssystems zur Erfassung von objektbezogenen Zustands- und/ oder Prozessdaten z.B. in einem Versand-, Transport- und/oder Fertigungssystem der einzelnen Objekte.

Im Stand der Technik sind Schaltungen zur Übertragung eines datenmodulierten Hochfrequenz-Datensignals von einem Sender zu einem Empfänger bekannt, bei der im Empfänger ein Oszillator und ein PLL-Synthesizer vorgesehen sind, um das empfangene Hochfrequenz-Datensignal zur weiteren Verarbeitung in ein niedrigeres Frequenzband zu verschieben. Derartige Schaltungen sind aufwendig gebaut und besitzen einen hohen Stromverbrauch. Sie eignen sich deshalb nicht für mobile Datenspeicher z.B. zur Datenübertragung zwischen einem Schreib-LeseGerät und mindestens einem mobilen Datenspeicher in einem Identifikationssystem mit mehreren an Objekten angebrachten mobilen Datenspeichern zur Erfassung von objektbezogenen Zustands- und/oder Prozeßdaten z.B. in einem Versand-, Transport- und/oder Fertigungssystem der einzelnen Objekte.

Aus dem Fachaufsatz von Faramaz Davarian "Mobile Digital Communiciatons via Tone Calibration", IEEE Transactions on Vehicular Technology, US, IEEE Inc. New York, Bd. VT-36, Nr. 2, Mai 1987 (1987-05), Seiten 55 bis 62, XP000759221, ISSN:0018-9545, ist eine digitale Übertragungstechnik bekannt, welche für Übertragungskanäle geeignet ist, die aufgrund einer Mehrwegausbreitung gedämpft und somit beeinträchtigt sind. Bei der vorgeschlagenen Übertragungstechnik wird ein Pilotton zusammen mit dem datentragenden Signal im gleichen Übertragungskanal übertragen. Empfängerseitig wird das empfangene Signal mittels eines Pilotton-Bandpassfilters gefiltert und nachfolgend ein zur Amplitudenhüllkurve des Pilottons reziprokes Kompensationssignal generiert. Das Kompensationssignal und das ursprüngliche datentragende Signal werden im Anschluss in einem Mixer miteinander vermischt, wobei das resultierende Basisbandsignal eine nahezu konstante Amplitude aufweist.

Aus dem Fachaufsatz von Thomas P. Holden und Dr. Kamilo Feher "A Spread-Spectrum Based Synchronization Technique for Digital Broadcast Systems", US, IEEE Inc. New York, Bd. 36, Nr. 3, 1. September 1990 (1990-09-01), Seiten 185-194, XP000161660, ISSN:0018-9316, ist eine digitale Übertragungstechnik zur Verbesserung der Effektivität der Synchronisierung in einem digitalen Kommunikationssystem bekannt. Bei der vorgeschlagenen Technik werden ein oder zwei Pilottonsignale in ein vorliegendes Datenspektrum eingefügt. Durch Modulation der Pilotsignale mit einer binären Pseudo-Zufallssequenz werden diese im Datenspektrum aufgespreizt. Durch die Aufspreizung sind die Pilotsignale gegen Interferenzen weniger störanfällig.

Der Erfindung liegt die Aufgabe zugrunde, einen mobilen Datenspeicher anzugeben, welcher einen geringeren Strombedarf aufweist.

Diese Aufgabe wird durch einen mobilen Datenspeicher mit den Merkmalen des Patentanspruchs 1 gelöst. Vorteilhafte Ausgestaltungen sind in den Unteransprüchen 2 - 5 angegeben. In Anspruch 6 ist ein Identifikationssystem mit einem Schreib-/Lesegerät und mindestens einem erfindungsgemäßen mobilen Datenspeicher angegeben. Anspruch 7 gibt eine geeignete Verwendung eines solchen Identifikationssystems an.

Die Erfindung beruht auf der Idee, zusätzlich zum datenmodulierten Hochfrequenz-Datensignal ein weiteres Hochfrequenz-Datensignal zu übertragen, welches zur Frequenzverschiebung und/oder zur Trägercodedemodulierung dient. Damit müssen im Empfänger zu diesen Zwecken keine separaten Signale mehr erzeugt werden, und es entfallen die hierfür benötigten Komponenten im Empfänger, wie z.B. PLL-Synthesizer und Oszillator.

Nach einer Verstärkung der beiden Hochfrequenz-Datensignale werden diese vermischt, und es wird ein datenmoduliertes Zwischenfrequenz-Datensgnal erzeugt, welches daraufhin datendemoduliert wird.

Zur Erhöhung der Störsicherheit des Senders des datenmodulierten Hochfrequenz-Datensignals kann letzteres auch einen Trägercode, z.B. einen Spread-Spectrum-Code, besitzen. In diesem Fall kann es vorteilhaft sein, die beiden übertragenen Hochfrequenz-Datensignale vor der Verstärkung zu trennen und gegebenenfalls unterschiedlich zu verstärken.

Die Vermischung der beiden Hochfrequenz-Datensignale kann in beiden Verfahrensvarianten - mit oder ohne Trennung vor der Verstärkung - in einem Mischer erfolgen, in dem die Frequenzen umgesetzt und korreliert werden.

Bei dem erfindungsgemäßen mobilen Datenspeicher ist zunächst eine Antenne zum gemeinsamen Empfang des datenmodulierten Hochfrequenz-Datensignals sowie eines zusätzlichen Hochfrequenz-Datensignals vorgesehen. Ferner dient ein Verstärker zur jeweiligen Verstärkung der beiden Hochfrequenz-Datensignale und es ist eine Mischereinheit zur Vermischung der Hochfrequenz-Datensignale zur Erzeugung eines Zwischenfrequenz-Datensignals vorgesehen.

Im Falle einer Trennung der beiden Hochfrequenz-Datensignale nach dem gemeinsamen Empfang und vor der weiteren Verarbeitung (z.B. bei einer Trägercodemodulierung des Hochfrequenz-Datensignals) kann diese Trennung in einer Filtereinheit, z.B. einem Diplexer-Filter, stattfinden.

Die Mischereinheit zur Vermischung der Hochfrequenz-Datensignale nach deren Empfang und Verstärkung zur Erzeugung eines datenmodulierten Zwischenfrequenz-Datensignals kann als Frequenzumsetzer-/Korrelatormischer ausgebildet sein.

Weitere Einzelheiten der Erfindung gehen aus den Ausführungsbeispielen in den Zeichnungsfiguren hervor. Es zeigen:
- FIG 1: eine Schaltung eines Empfängers nach dem Stand der Technik sowie
- FIG 2: eine Schaltung mit vereinfachter Empfängerarchitektur.

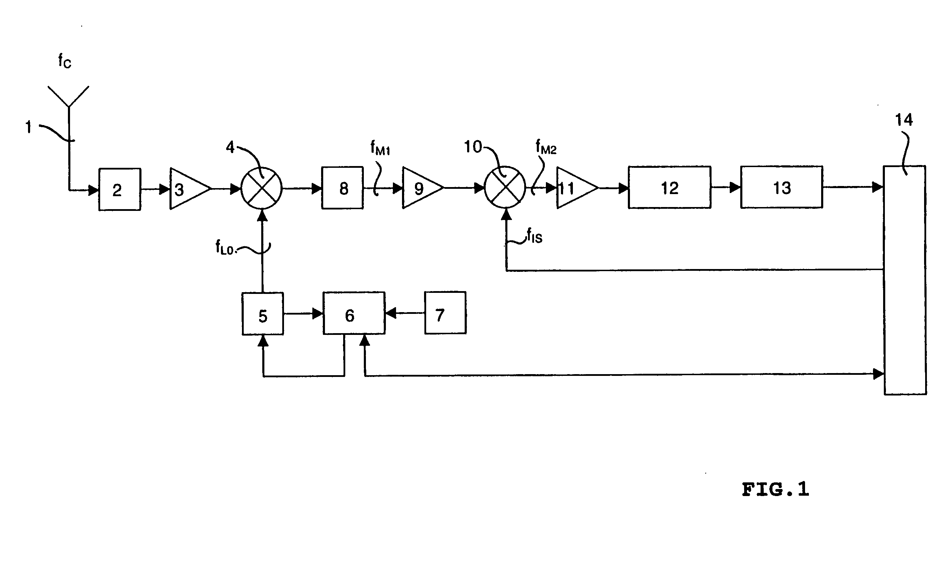

FIG 1 zeigt eine Schaltung eines Empfängers nach dem Stand der Technik zum Empfang eines datenmodulierten Hochfrequenz-Datensignals f_{C} (Signal f_{C}), welches über die Antenne 1 empfangen wird und sodann zunächst einen Filter 2 zur Unterdrückung von außerbandigen Störsignalen (Wide-up-Filter) durchläuft. Nach Durchlaufen des Verstärkers 3 tritt das Signal f_{C} in den Mischer 4 ein, in den auch das Datensignal f_{LO} (Signal f_{LO}) des lokalen (empfängerinternen) Oszillators 5 eingespeist wird.

Das Signal f_{LO} wird auf an sich bekannte Art und Weise im Wege der Nachlaufsynchronisation (PLL, Phase-locked-loop) durch Zusammenwirken des Oszillators 5, insbesondere eines spannungsgesteuerten Oszillators (VCO, voltage-controlled-oscillator), eines PLL-Synthesizers 6 sowie eines Frequenzgebers 7 und der Steuerung sowie Überwachung des Mikrocontrollers 14 erzeugt.

Nach dem Mischer 4 findet eine Frequenzumsetzung und Herabsetzung der Frequenz des Signals f_{C} statt.

Am Ausgang des Mischers 4 tritt sowohl die Frequenzsumme f_{C} + f_{LO} als auch die Frequenzdifferenz f_{C} - f_{LO} auf. Die Frequenzsumme wird durch den Filter 8 unterdrückt, einen als Kanalfilter wirkenden Zwischenfrequenzfilter. Damit entsteht ein Mischersignal f_{M1} mit einer neuen Zwischenfrequenz, nämlich der Frequenzdifferenz f_{C} - f_{LO} zur Verstärkung im Verstärker 9 und zur Mischung im Mischer 10 mit dem internen Schlüsselsignal f_{IS} (Signal f_{IS}) zur Beseitigung der Frequenzspreizung, falls das Hochfrequenz-Datensignals f_{C} mit einem Trägercode (z.B. Spread-spectrum-Code) moduliert war. Das Signal f_{IS} mit der internen Schlüsselfrequenz wird vom Mikrocontroller 14 bereitgestellt.

Nach dem Mischer 10 durchläuft das entspreizte Mischersignal f_{M2} den Verstärker 11, den Detektor 12 und den Datenformer 13 zur Datendemodulation und zur Weiterverarbeitung im Mikrocontroller 14.

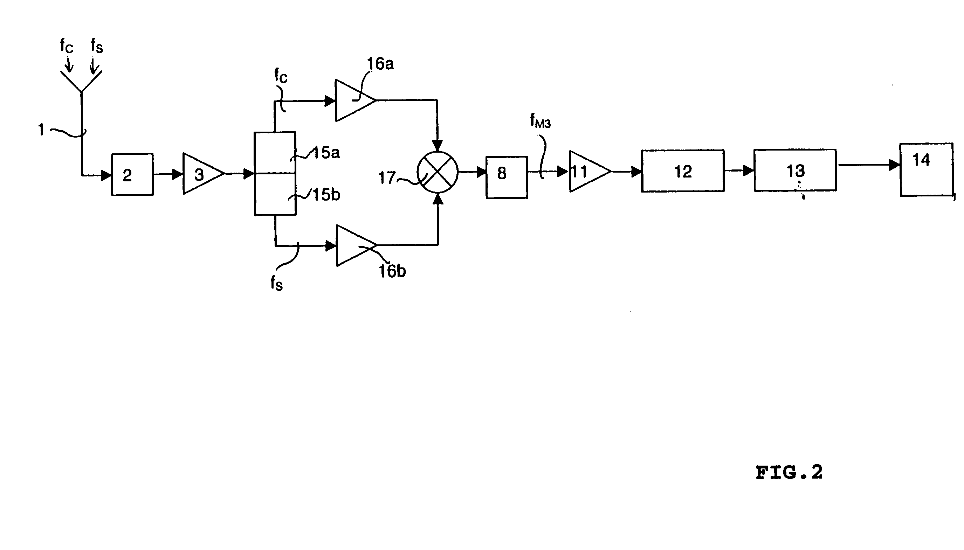

FIG 2 zeigt eine schematische Darstellung einer Schaltung eines Empfängers zum Empfang eines datenmodulierten Hochfrequenz-Datensignals f_{C} (Signal f_{C}) von einem Sender. Dabei wird über die Antenne 1 neben dem Signal f_{C} auch ein zusätzliches Hochfrequenz-Datensignal f_{S} (Signal f_{S}) empfangen. Die beiden Signale f_{C} und f_{S} durchlaufen einen Filter 2 zur Unterdrückung von außerbandigen Störsignalen (Wide-up-Filter) und einen Verstärker 3.

Insbesondere dann, wenn das Hochfrequenz-Datensignal f_{C} auch trägercodemoduliert ist, z.B. als Spread-spectrum-Signal, sind Trägerbandfilter 15a, 15b zur Trennung der Signale f_{C} und f_{S} vorgesehen, wobei das Signal f_{C} im Trägerbandverstärker 16a und das Signal f_{S} im Trägerbandverstärker 16b verstärkt wird. Die derartig getrennt verstärkten Signale werden dann wieder dem Mischer 17 zugeführt, in dem eine Frequenzumsetzung und eine Trägercodedemodulierung des Signals f_{C} durch das Signal f_{S} stattfinden.

Am Ausgang des Mischer 17 tritt sowohl die Frequenzsumme f_{C} + f_{S} als auch die Frequenzdifferenz f_{C} - f_{S} auf, wobei die Frequenzsumme durch den Zwischenfrequenzfilter 8 unterdrückt wird. Damit verlässt den Zwischenfrequenzfilter 8 ein Mischersignal f_{M3} (Signal f_{M3}), welches sich auf einer Zwischenfrequenzlage unterhalb der Frequenz des Signals f_{C} befindet, wobei gleichzeitig die Trägercodemodulierung des Datensignals f_{C} beseitigt wurde ("Entspreizung").

Das Signal f_{M3} wird im Verstärker 11, im Detektor 12 und dem Datenformer 13 auf die auch in FIG 1 beschriebene Art und Weise datendemoduliert und dem Mikrocontroller 14 zur weiteren Verarbeitung zugeführt.

Falls das Signal f_{C} keine Trägercodemodulierung aufweist, ist es auch nicht notwendig, die Signale f_{C} und f_{S} in Trägerbandfiltern 15a, 15b zu trennen und getrennt in Trägerbandverstärkern 16a, 16b zu verstärken. In diesem Fall können nach Durchlauf des Verstärkers 3 beide Datensignale f_{C} und f_{S} gemeinsam verstärkt und dem Mischer 17 zugeführt werden (nicht abgebildet).

In der Schaltung nach FIG 2 erfolgt die Frequenzumsetzung in die Zwischenfrequenzlage und/oder die Entspreizung des Datensignals f_{C} durch das externe Signal f_{S}, welches gemeinsam mit dem Signals f_{C} übertragen wird.

Im Gegensatz zur Schaltung nach dem Stand der Technik müssen bei der Schaltung nach FIG 2 weder ein internes Signal f_{IS} zur Trägercodemodulation des Signals f_{C} noch ein internes Signal f_{LO} im Empfänger bereitgestellt werden. Damit besitzt die Schaltung nach FIG 2 einen einfacheren Aufbau und einen geringeren Stromverbrauch.

## Patentansprüche

1. Mobiler Datenspeicher mit einer Antenne zum Empfang eines Hochfrequenz-Datensignals,
**gekennzeichnet durch**
a) die Ausbildung der Antenne (1) zum gemeinsamen Empfang eines ersten Hochfrequenz-Datensignals (f_{C}) in einem ersten Frequenzbereich und eines zweiten Hochfrequenz-Datensignals (f_{S}) in einem zweiten, vom ersten Frequenzbereich verschiedenen Frequenzbereich,
b) einen Verstärker (16a, 16b) zur jeweiligen Verstärkung der beiden Hochfrequenz-Datensignale (f_{C}, f_{S}) und
c) einen Mischer (17) zur Vermischung der beiden Hochfrequenz-Datensignale (f_{C}, f_{S}) zur Erzeugung eines datenmodulierten Zwischenfrequenz-Datensignals (f_{ZF}).

2. Mobiler Datenspeicher nach Anspruch 1, wobei eine Filtereinheit (15a, 15b) zur Trennung der beiden Hochfrequenz-Datensignale (f_{C}, f_{S}) vorgesehen ist.

3. Mobiler Datenspeicher nach Anspruch 2, wobei die Filtereinheit (15a, 15b) als Diplexer-Filter ausgebildet ist.

4. Mobiler Datenspeicher nach einem der vorhergegangenen Ansprüche, wobei der Mischer (17) zur Vermischung der beiden Hochfrequenz-Datensignale (f_{C}, f_{S}) zur Erzeugung eines datenmodulierten Zwischenfrequenz-Datensignals (f_{ZF}) als Frequenzumsetzer- und Korrelatormischer ausgebildet ist.

5. Mobiler Datenspeicher nach einem der vorhergegangenen Ansprüche, wobei der Verstärker (16a, 16b) zur Verstärkung der beiden Hochfrequenz-Datensignale (f_{C}, f_{S}) einen unterschiedlichen Verstärkungsgrad aufweist.

6. Identifikationssystem, welches aufweist
a) ein Schreib-/Lesegerät (SLG) zum Senden eines ersten Hochfrequenz-Datensignals (f_{C}) in einem ersten Frequenzbereich und eines zweiten Hochfrequenz-Datensignals (f_{S}) in einem zweiten, vom ersten Frequenzbereich verschiedenen Frequenzbereich und
b) mindestens einen mobilen Datenspeicher (MDS) nach einem der Ansprüche 1 bis 5.

7. Verwendung eines Identifikationssystems nach Anspruch 6 zur Erfassung von objektbezogenen Zustands- und/oder Prozessdaten, z.B. in einem Versand-, Transport- und/oder Fertigungssystem der einzelnen Objekte.

## Claims

1. Mobile data memory having an antenna for receiving a high-frequency data signal,
**characterised by**
a) the design of the antenna (1) for receiving both a first high-frequency data signal (*f_{c}*) in a first frequency range and a second high frequency data signal (*fₛ*) in a second frequency range which differs from the first frequency range,
b) an amplifier (16a, 16b) for respectively amplifying the two high-frequency data signals (*f_{c}*,*fₛ*) and
c) a mixer (17) for mixing the two high-frequency data signals (*f_{c}*,*fₛ*) for generating a data-modulated intermediate frequency data signal (*f_{IF}*).

2. Mobile data memory according to claim 1, with a filter unit (15a, 15b) being provided to separate the two high frequency data signals (*f_{c}*,*fₛ*).

3. Mobile data memory according to claim 2, with the filter unit (15a, 15b) being designed as a diplexer filter.

4. Mobile data memory according to one of the preceding claims, with the mixer (17) being designed to mix the two high-frequency data signals (*f_{c}*,*fₛ*) in order to generate a data-modulated intermediate frequency data signal (*f_{ZF}*) as a frequency converter and correlator mixer.

5. Mobile data memory according to one of the preceding claims, with the amplifier (16a, 16b) for amplifying the two high-frequency data signals (*f_{c}*,*fₛ*) comprising a different amplification level.

6. Identification system, comprising
a) a read/write device (SLG) for transmitting a first high-frequency data signal (*f_{c}*) in a first frequency range and a second high-frequency data signal (*fₛ*) in a second frequency range which differs from the first frequency range and
b) at least one mobile data memory (MDS) according to one of claims 1 to 5.

7. Use of an identification system according to claim 6 for detecting object-related status and/or process data, e.g. in a shipping system, transport system and/or production system of the individual objects.

## Revendications

1. Mémoire de données mobile comportant une antenne de réception d'un signal de données à haute fréquence,
**caractérisée par**
a) la constitution de l'antenne (1) pour recevoir conjointement un premier signal de données à haute fréquence (f_{c}) dans une première gamme de fréquences et un deuxième signal de données à haute fréquence (fₛ) dans une deuxième gamme de fréquences, différente de la première gamme de fréquences,
b) un amplificateur (16a, 16b) pour amplifier respectivement les deux signaux de données à haute fréquence (f_{c}, fₛ) et
c) un mélangeur (17) pour mélanger les deux signaux de données à haute fréquence (f_{c}, fₛ) afin de générer un signal de données à fréquence intermédiaire (f_{ZF}) modulé par les données.

2. Mémoire de données mobile selon la revendication 1, dans laquelle une unité de filtrage (15a, 15b) est prévue pour séparer les deux signaux de données à haute fréquence (f_{c}, fₛ).

3. Mémoire de données mobile selon la revendication 2, dans laquelle l'unité de filtrage (15a, 15b) est conformée en filtre diplexeur.

4. Mémoire de données mobile selon l'une des revendications précédentes, dans laquelle le mélangeur (17) destiné à mélanger les deux signaux de données à haute fréquence (f_{c}, fₛ) afin de générer un signal de données de fréquence intermédiaire (f_{ZF}) est constitué en mélangeur convertisseur de fréquences et corrélateur.

5. Mémoire de données mobile selon l'une des revendications précédentes, dans laquelle l'amplificateur (16a, 16b) destiné à amplifier les deux signaux de données à haute fréquence (f_{C}, f_{S}) a un coefficient d'amplification variable.

6. Système d'identification qui comporte
a) un appareil d'écriture/lecture pour envoyer un premier signal de données à haute fréquence (f_{C}) dans une première gamme de fréquences et un deuxième signal de données à haute fréquence (f_{S}) dans une deuxième gamme de fréquences, différente de la première gamme de fréquences, et
b) au moins une mémoire de données mobile (MDS) selon l'une des revendications 1 à 5.

7. Utilisation d'un système d'identification selon la revendication 6 pour détecter des données d'état et/ou de processus liées à des objets, par exemple dans un système d'envoi, de transport et de fabrication d'objets individuels.
